# FASCICULE DE BREVET EUROPEEN

(11) **EP 2 181 748 B1**
(45) Date de publication et mention de la délivrance du brevet: **24.07.2013**
(21) Numéro de dépôt: 09306013.5
(22) Date de dépôt: 27.10.2009
(51) Int. Cl.: B01D 39/12

(54) **Séparateur hydrodynamique pour nettoyer une veine de fluide**
Hdrodynamischer separator zur Reinigung eines Fluidstromes
Hydrodynamic separator for cleaning a fluid stream

(30) Priorité: 29.10.2008 FR 0857367
(43) Date de publication de la demande: 05.05.2010
(73) Titulaire: Hydroconcept, 78190 Trappes (FR)
(72) Inventeur: Morin, Antoine, 78320, LA VERRIERE (FR); Flochel, Jean-Marc, 92370, CHAVILLE (FR)
(74) Mandataire: Herrburger, Pierre

(56) Documents cités:
- WO-A-00/38855
- WO-A-99/00171
- WO-A1-2006/065964
- US-A- 4 883 509
- US-B1- 6 241 881

## Description

### Domaine de l'invention

La présente invention concerne un séparateur hydrodynamique destiné à séparer des matières solides d'une veine d'effluents chargés traversant l'appareil et comprenant une cloison de séparation sur laquelle arrive la veine de l'effluent et séparant une chambre d'entrée, où sont recueillis les déchets solides de dimensions déterminées et une chambre de sortie située en aval de la cloison de séparation recevant les effluents nettoyés de leurs déchets solides, la cloison de séparation est constituée par une grille, étant destinée à être traversée par les effluents nettoyés, la chambre d'entrée et la chambre de sortie étant réalisées dans une cuve et les déchets de grandes dimensions, qui ne peuvent traverser la cloison de séparation, sont collectés au fond de la chambre d'entrée.

### Etat de la technique

Il existe selon le document US 6 241 881, un séparateur de macro-déchets constitué par un ouvrage cylindrique muni, en partie haute, d'une entrée d'effluents chargés et d'une sortie d'effluents nettoyés. Le séparateur proprement dit est constitué par un volume cylindrique dont la partie inférieure est occupée par un panier. La veine d'effluents chargés est mise en mouvement de circulation dans ce volume cylindrique au-dessus du panier, de sorte que les macro-déchets dont la dimension est supérieure à celle des mailles du panier restent retenus dans le panier ; les effluents ainsi nettoyés traversent le panier pour passer dans le volume périphérique entourant le panier dans la sortie en partie basse de cette cuve, pour remonter dans la conduite de sortie dont la position en hauteur définit le niveau de liquide restant dans le séparateur.

Mais ce séparateur a l'inconvénient de se colmater très facilement car les macro-déchets tels que des sacs plastiques, des bouteilles, etc, risquent de s'accumuler contre les parois de la grille puisque la veine d'effluents chargés ne tourne que dans la partie supérieure de la cuve. La veine d'effluents nettoyés s'échappe simplement radialement à travers les mailles du panier sans effectuer à cet endroit, de mouvements de circulation puisque le panier ne peut guider ce mouvement de circulation. Les déchets encombrant les parois du panier réduisent le débit du liquide traversant le panier et, par suite, cela réduit l'efficacité de la séparation puisque le débit d'effluents qui ne peut passer à travers le panier du séparateur sera directement évacué vers la sortie par le trop-plein.

On connaît également d'après le document WO 99/00171, une grille de séparateur, cette grille en tôle déployée présente des ouvertures en forme de losanges. De telles ouvertures facilitent l'accrochage des éléments solides lors du passage de la veine d'effluents à travers la grille car l'écoulement sur les côtés inclinés des ouvertures crée des turbulences et repousse l'eau et les déchets dans les angles ce qui contribue à colmater les ouvertures.

Pour réduire le colmatage du panier et améliorer l'efficacité de la séparation, il existe déjà des séparateurs hydrodynamiques des effluents urbains et industriels comprenant un cuvelage dans lequel est placée une grille latérale sans fond de forme cylindrique circulaire dont la paroi est constituée par une grille en métal déployé. Dans ces séparateurs, les effluents arrivent à l'intérieur de ce panier à fond ouvert pour y tourner, de façon à faire descendre par effet de cyclone, les matières lourdes et encombrantes chargeant les effluents, au fond du cuvelage, alors que le liquide séparé de ces produits qui le chargent, peut traverser la surface latérale du panier et être évacué comme effluent nettoyé.

La circulation de la veine d'effluents à l'intérieur du panier en tôle déployée permet d'éviter, dans une certaine mesure, le dépôt de produits ou particules d'une certaine dimension sur la grille de façon à conserver la totalité de la section de passage libre vis-à-vis des effluents.

Ces séparateurs connus ont des grilles en métal déployé, avec des ouvertures lenticulaires ou en éventails dont le grand axe est vertical. Néanmoins, la forme lenticulaire donne à ces ouvertures une largeur relativement réduite et les deux extrémités de l'ouverture sont définies par un angle aigu. La section de passage est ainsi relativement faible et les déchets ou macrodéchets, tels que des fibres, peuvent facilement s'accrocher dans les fentes ainsi constituées. Cela favorise l'encrassement d'autant plus que les noeuds, c'est-à-dire les liaisons formées par l'intersection croisée de deux lanières bordant une ouverture ont une forme complexe favorisant la dispersion de la veine d'effluent à ce niveau. Les filets de la veine d'effluents circulant ainsi sur la paroi constituée par une telle grille, sont déviés dans des directions divergentes au niveau des noeuds ce qui réduit l'efficacité du dégagement des macro-déchets collés à la grille.

A contrario, cette forme lenticulaire des ouvertures ou crevées de la tôle engendre par les surfaces déflectrices ainsi constituées au niveau des noeuds, des filets d'effluents dispersés, passant précisément au-dessus des coins imbriqués des ouvertures lenticulaires qui se succèdent dans la direction de l'écoulement, favorisant le bourrage de ces coins et, par suite, l'obstruction progressive des ouvertures, très préjudiciable pour le rendement du nettoyage. Cela nécessite des interventions fréquentes dans le séparateur au risque de voir les effluents non nettoyés, déborder du panier et passer directement dans la sortie.

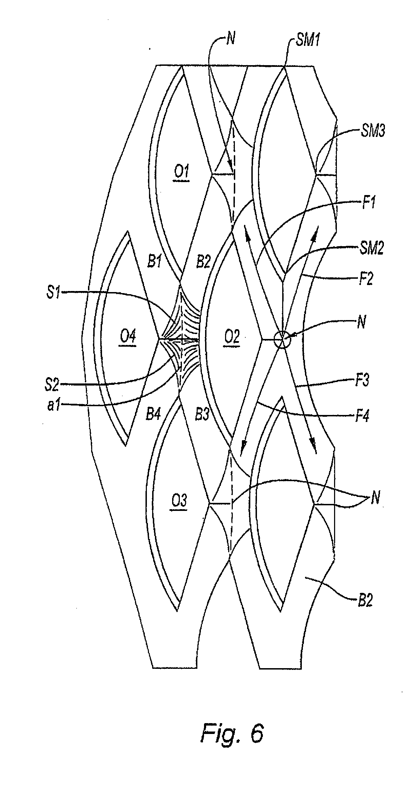

La figure 6 est une vue à échelle agrandie d'une telle cloison connue, en métal déployé connue, utilisée dans les techniques de séparation dynamique de déchets de grandes dimensions de veine d'effluents chargés.

Ces ouvertures en forme d'éventails, dans la nappe de métal déployé sont délimitées pratiquement par des branches ou lanières de même largeur sur toute la surface de la grille. Les lanières se réunissent par des noeuds N. Chaque noeud N est la jonction de quatre branches ou lanières B1, B2, B3, B4 qui constituent les côtés de quatre ouvertures adjacentes O1, 02, 03, 04 ; ce motif se répète à l'identique sur toute la surface de la tôle en métal déployé. Les ouvertures O1, ..., 04 ont toutes une forme d'éventail ou de triangle curviligne avec pour sommets SM1, SM2, SM3.

Aux noeuds N de deux groupes de deux branches B1, B2, B3, B4 à l'endroit de l'appui de l'outil découpant et déformant le métal, la forme obtenue est très particulière et se compose en fait de quatre surfaces partielles : deux surfaces S1, S2 directement à la sortie du sommet SM3 et qui sont dirigées vers le haut, puis une arête a1 qui rejoint sensiblement les sommets opposés SM1, SM2 de deux ouvertures O1, 03, pour rejoindre ensuite le sommet SM3 de l'ouverture 02 suivante par une forme bombée.

Cette forme complexe de la surface du noeud N est également schématisée par un faisceau de quatre flèches F1-F4 issues d'un point commun et représentées sur le dessus d'un noeud suivant pour montrer d'une manière simplifiée, la direction des surfaces composant le noeud N.

Or, cette surface du noeud est la principale surface rencontrée par la veine d'effluents qui lèche la grille séparatrice de sorte que cette veine subit de multiples déflections dans le sens de passage des effluents. L'écoulement le long de la surface de la grille ne favorise pas le nettoyage des sommets SM1 et SM2 des orifices O1, ..., 04 dans lesquels peuvent s'accrocher des objets de grandes dimensions colmatant progressivement cette grille et réduisant le passage des effluents nettoyés.

### But de l'invention

La présente invention a pour but de remédier aux inconvénients des séparateurs connus et se propose de développer un séparateur hydrodynamique efficace dans son nettoyage d'effluents pluviaux urbains ou industriels, qui soit facile à réaliser et à entretenir et dont les risques de bourrage des ouvertures soient réduits.

### Exposé et avantages de l'invention

A cet effet, l'invention concerne un séparateur hydrodynamique du type défini ci-dessus **caractérisé en ce que**
- la grille de la cloison de séparation est constituée par une tôle en métal déployé dont les ouvertures ont une forme hexagonale allongée délimitée par des lanières de métal déployé, ces lanières étant formées de surfaces planes engendrées par des génératrices parallèles, faisant un angle obtus par rapport à la surface globale de grille,
- les ouvertures hexagonales, allongées, étant bordées par des lanières de métal formant les côtés dans le sens de la longueur des ouvertures et par des lanières de métal formant les branches rejoignant les deux sommets des ouvertures hexagonales par des lignes de pliage,
- les côtés plans ayant une largeur égale au double de celle des branches,
- les ouvertures ayant un grand axe perpendiculaire à la direction du petit axe correspondant à la direction de la veine d'effluents chargés passant le long de la grille lorsque celle-ci est installée dans le séparateur hydrodynamique.

La structure particulière de la grille en métal déployé avec des ouvertures hexagonales allongées permet d'engendrer dans la veine de fluide circulant contre la surface de séparation, des jets parallèles, guidés par les noeuds de forme large et pleine entre les ouvertures. La largeur de la surface plane est constituée pratiquement par l'intégralité de la surface des noeuds, puisque cette surface est délimitée par les deux appuis de l'outil réalisant la découpe du métal pour le déployer en lanières, permettant de bien guider la partie de veine fluide au niveau de cette surface sans la perturber en formant des filets de fluide, parallèles. Le guidage évite efficacement le dépôt de macrodéchets et de particules de grandes dimensions dans les coins des ouvertures de forme hexagonale, d'autant plus que grâce à la forme hexagonale allongée, l'angle des ouvertures est relativement important.

On évite ainsi le colmatage de la surface de la grille, ce qui permet de réduire le nombre d'interventions de nettoyage ou rend ces interventions pratiquement inutiles suivant la nature des effluents traités et leur charge en matières polluantes. Cette plus grande efficacité du nettoyage des effluents est également avantageuse pour les process situés en aval, qui assurent un traitement plus poussé des effluents.

La grille à ouvertures ou mailles hexagonales allongées, telle que définies ci-dessus permet d'obtenir par rapport à l'état de la technique, un pourcentage de vide plus élevé par rapport aux ouvertures ou mailles des tôles en métal déployé à ouvertures lenticulaires selon l'état de la technique. La grille permet de réduire les pertes de charge induites par la traversée des effluents nettoyés (eaux nettoyées) à travers les ouvertures de la grille et elle limite l'encrassement aux deux extrémités ou sommets des ouvertures de la grille.

La grille augmente la capacité de traitement par unité de surface et réciproquement pourra traiter un même débit à performance équivalente dans un ouvrage plus compact, donc plus économique.

La grille permet également d'améliorer le fonctionnement hydraulique des surfaces de guidage formant des déflecteurs à la manière de persiennes, pour écarter les effluents bruts par rapport à la surface de la grille et réduire les phénomènes d'encrassage et de colmatage.

Suivant une autre caractéristique, l'invention concerne un séparateur hydrodynamique **caractérisé en ce qu'**il se compose d'une cuve de forme cylindrique de section circulaire, dont le volume intérieur est subdivisé par une cloison séparatrice en une chambre d'entrée et une chambre de sortie, la canalisation d'entrée débouchant dans la chambre d'entrée et la canalisation de sortie des effluents nettoyés débouchant dans la chambre de sortie,
- la cloison étant composée d'une partie inférieure pleine, d'une partie médiane formée par une grille en métal déployé à ouvertures hexagonales de grand axe dirigé dans la direction verticale, et d'une partie de cloison supérieure, fermant pratiquement toute la hauteur de l'intérieur de la cuve,
- cette cloison rejoignant la paroi de la cuve à l'une de ces deux extrémités par un contact tangentiel, en étant disposée selon un tracé courbe, notamment en arc de cercle, et rejoignant à l'autre extrémité une partie de cloison disposée radialement, formant un trop-plein protégé par une paroi siphoïde permettant l'évacuation directe d'un débit excessif d'effluents à l'entrée,
- la cloison ayant son tracé convexe de façon à laisser dégagée pratiquement la partie centrale de la cuve surmontée d'un orifice d'accès.

Ce séparateur hydrodynamique intégrant le trop-plein dans la cuve de traitement, a l'avantage d'avoir des dimensions réduites et de permettre néanmoins un bon accès au volume de la cuve recueillant les déchets, c'est-à-dire le volume dans lequel arrivent les effluents chargés en amont de la grille. Cette accessibilité est assurée par la forme courbe de la grille qui ne représente qu'un arc de courbe pour la section du cylindre constituant la cloison séparatrice. Cela permet de contourner en quelque sorte par la forme concave, la projection de l'ouverture d'accès réalisée dans le couvercle de la cuve et de descendre une échelle à cet endroit.

Cela permet une intervention humaine, facile pour les travaux à effectuer directement dans la cuve. En outre, cela facilite la mise en place du tuyau d'extraction des déchets déposés au fond de la cuve.

Cette bonne accessibilité réalisée grâce au tracé de la cloison séparatrice et notamment de la grille, ne gêne pas la mise en rotation de la veine d'effluents chargés qui pourront tourner devant la grille et la nettoyer des déchets qui pourraient s'y fixer provisoirement, tout en favorisant la descente de ces déchets au fond de la cuve par le mouvement de rotation ainsi créé et sans gêner le passage des effluents nettoyés à travers la grille. L'ensemble du séparateur hydrodynamique est ainsi compact et d'un entretien particulièrement pratique.

Suivant une autre caractéristique avantageuse, les parties inférieure et supérieure de la cloison sont constituées par des éléments en tôle pleine. Le trop plein servant à évacuer les débits excédentaires est alors disposé dans une chambre située en amont du séparateur ; il est constitué par un seuil oblique dont la hauteur est calculée afin d'obtenir une vitesse d'écoulement suffisante devant la grille pour éviter son colmatage.

Cette forme de séparateur hydrodynamique permet de traiter des débits relativement importants tout en facilitant l'accès à la cuve tant pour l'extraction des déchets déposés que pour une intervention humaine à l'intérieur. L'accès à la cuve est possible dans chacun des deux volumes séparés par la cloison et cela par des orifices d'accès distincts réalisés dans le couvercle.

La forme de la cloison permet de conserver et de favoriser l'effet de mise en rotation de la veine d'effluents chargés, pour favoriser la séparation de macro-déchets tout en évitant le colmatage de la grille. La perméabilité de la grille est ainsi maintenue ce qui est avantageux pour conserver le rendement de la séparation et assurer le traitement du débit nominal d'effluents.

L'ensemble du séparateur hydrodynamique reste néanmoins très compact car la chambre d'entrée, la chambre de sortie et l'éventuelle chambre de jonction sont des chambres de faible profondeur d'enfouissement par rapport au niveau supérieur de l'ensemble de l'installation.

Suivant une autre caractéristique, le séparateur hydrodynamique est formé
- d'une cuve cylindrique de section circulaire, munie d'un ouvrage extérieur formant un déversoir, installé à l'entrée de la cuve et relié à la canalisation d'arrivée des effluents chargés, la cuve étant subdivisée en une chambre d'entrée d'effluents chargés et
- d'une chambre de sortie d'effluents nettoyés avec une cloison de forme cylindrique et de section sensiblement en demi-cercle, comprenant une partie inférieure pleine, surmontée d'une grille en tôle déployée à ouvertures de forme hexagonale dont le grand axe est vertical et une partie supérieure pleine,
   * la cloison rejoignant le côté intérieur de la cuve est une cloison radiale,
   * le boîtier d'entrée ayant une cloison de trop-plein dirigeant le flux d'entrée vers l'orifice d'entrée de la cuve pour diriger la veine d'effluents tangentiellement sur la cloison supérieure pour être mise en rotation et descendre en tournant sur la face intérieure de la grille,
   * cette cloison de trop-plein laissant passer un débit excessif de la canalisation d'entrée vers le regard de sortie, directement sans passer par la cuve du séparateur hydrodynamique,
   * la sortie de la chambre d'effluents nettoyés étant également reliée au regard de sortie.

Suivant une autre caractéristique intéressante, le séparateur se compose d'une cuve de traitement de forme cylindrique circulaire, logeant en son centre une partie cylindrique formant une cloison de séparation composée d'une partie inférieure pleine, surmontée d'une grille de forme cylindrique réalisée en tôle déployée avec des ouvertures hexagonales dont le grand axe est vertical, la grille étant elle-même surmontée d'une partie supérieure pleine cylindrique, et
un ouvrage d'entrée relié à la conduite d'effluents chargés, cet ouvrage d'entrée étant muni d'une cloison de trop-plein divisant l'ouvrage en un volume d'entrée dirigeant les effluents chargés tangentiellement dans la chambre extérieure de la cuve et un volume de sortie au-delà de la cloison de trop-plein et dans lequel passent directement les effluents non traités,
la veine d'effluents chargés étant dirigée suivant un mouvement de rotation dans la chambre d'entrée recevant les effluents chargés entourant la chambre cylindrique de sortie recevant les effluents nettoyés ayant traversé la grille,
le dessus de la cuve ayant un orifice d'accès permettant d'accéder dans la chambre extérieure entourant la cloison.

Ce séparateur hydrodynamique se caractérise par une réalisation de dimensions importantes pour la cuve tant en diamètre qu'en hauteur. L'accessibilité de la cuve est également assurée.

Enfin, la mise en circulation de la veine d'effluents chargés permet de nettoyer la grille en évitant le colmatage et en conservant la parfaite transparence de la grille séparatrice grâce à sa structure de tôle déployée à ouvertures hexagonales.

Dans tous les cas, le volume de stockage des déchets dans le séparateur est beaucoup plus important que dans les séparateurs connus, ce qui permet de réduire le nombre d'interventions pour vider le séparateur.

Suivant une autre caractéristique, la chambre cylindrique de sortie est reliée à la sortie du séparateur par une conduite formant siphon.

Grâce à cette sortie en siphon, les liquides légers qui chargent les effluents ne peuvent passer dans la sortie par cette conduite formant siphon.

### Dessins

La présente invention sera décrite ci-après de manière plus détaillée à l'aide des dessins annexés dans lesquels :
- la figure 1A est une vue en plan d'une partie d'une grille de séparateur hydrodynamique selon l'invention,
- la figure 1B montre, à échelle agrandie, le détail d'une maille de la grille de la figure 1A,
- la figure 1C est une vue analogue à celle de la figure 1A, portant les différentes indications de repérage des éléments de la grille,
- la figure 1D est une vue en coupe de la grille de séparateur de la figure 1A, coupée suivant un plan horizontal parallèle à la direction de passage des effluents,
- la figure 2 est une vue schématique du procédé de fabrication d'une grille en métal déployé,
- les figures 3A-3B-3C montrent un premier mode de réalisation d'un séparateur hydrodynamique selon l'invention,

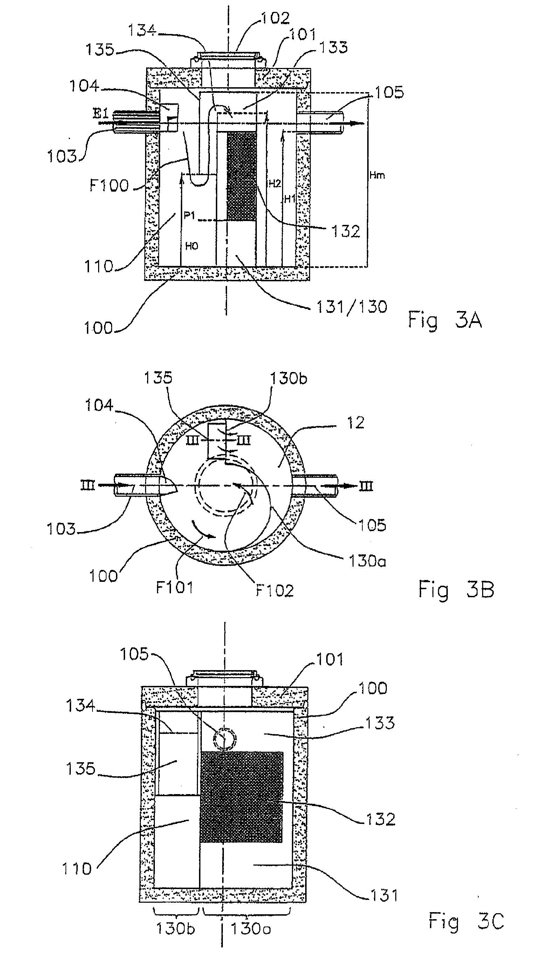

   * la figure 3A étant une coupe axiale verticale de la figure 3B,
   * la figure 3C étant une autre coupe axiale verticale, suivant un plan perpendiculaire à celui de la figure 3A,
   * la figure 3B est une coupe horizontale du séparateur hydrodynamique,

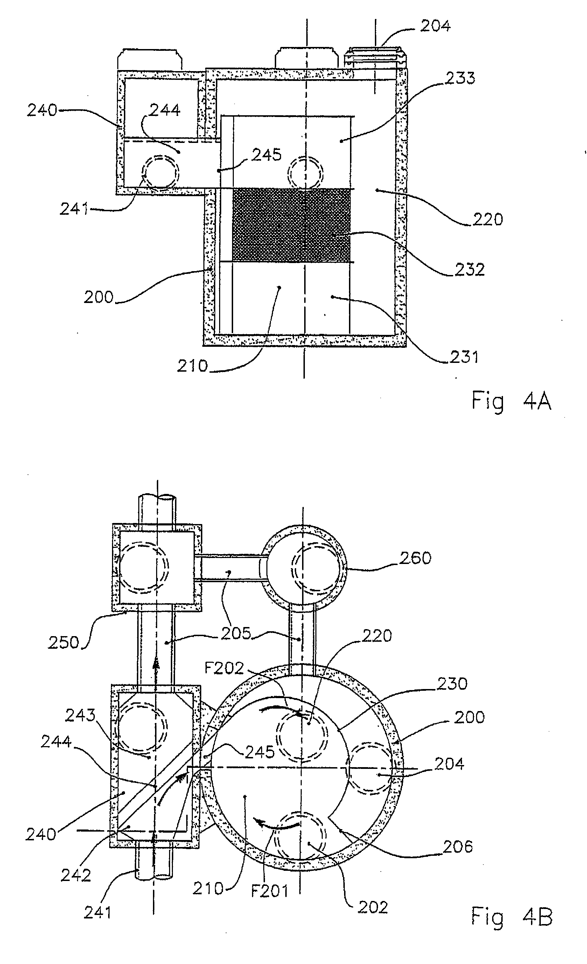

- les figures 4A, 4B montrent un second mode de réalisation d'un séparateur hydrodynamique dans lesquelles
   * la figure 4A est une coupe axiale verticale de la figure 4B,
   * la figure 4B est une coupe horizontale du séparateur,

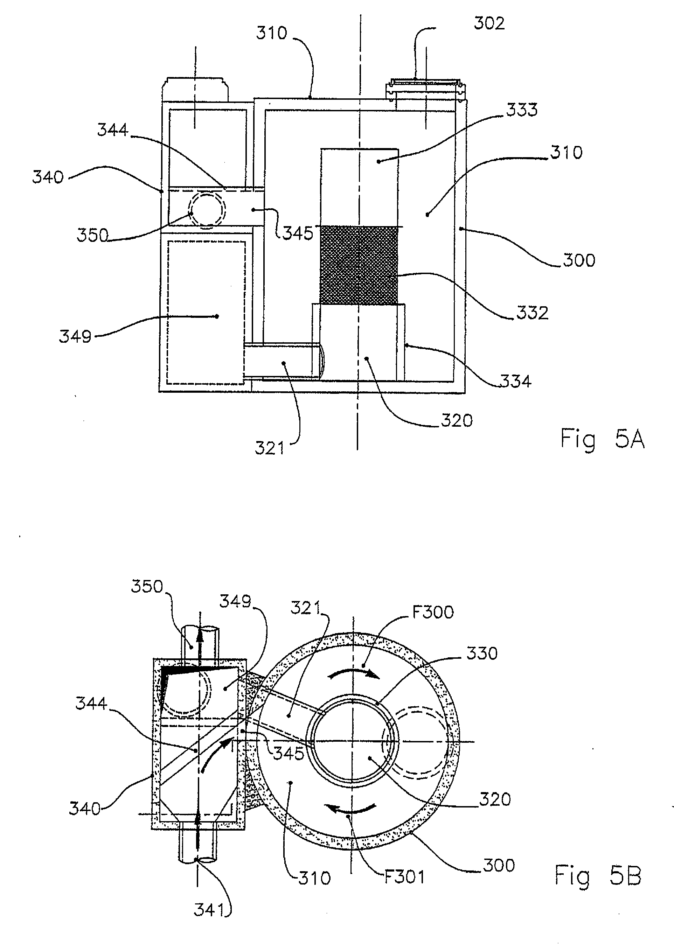

- les figures 5A, 5B montrent un troisième mode de réalisation d'un séparateur hydrodynamique selon l'invention dans lesquelles
   * la figure 5A est une coupe axiale verticale du séparateur,
   * la figure 5b est une coupe horizontale du séparateur,
- la figure 6 est une vue en plan, à échelle agrandie d'une partie de grille de séparateur hydrodynamique selon l'état de la technique.

### Description de modes de réalisation de l'invention

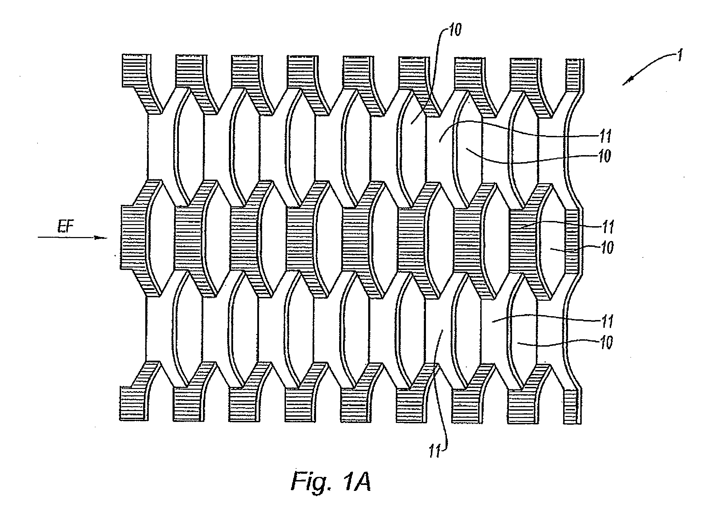

Selon les figures 1A-1D, l'invention concerne un séparateur hydrodynamique pour séparer des matières solides d'une veine de liquide (effluents pluviaux urbains ou industriels) contenant des déchets, des particules, des macrodéchets qu'il faut séparer d'abord de cette veine d'effluents avant de traiter cette veine de manière plus fine.

Comme cela sera vu ensuite à l'aide des figures 3A-5B, le séparateur hydrodynamique est constitué d'un volume délimité par un cuvelage munie d'une arrivée d'effluents chargés de déchets et d'une sortie d'effluents nettoyés des plus grosses particules.

Pour assurer cette séparation, le séparateur est divisé en une chambre d'entrée et une chambre de sortie, par une grille destinée à retenir les particules de grandes dimensions qui sont accumulées devant la grille ou au fond du séparateur. Le dégagement de la grille est en principe assuré par le mouvement de circulation de la veine d'effluents à l'intérieur du séparateur. Les effluents nettoyés traversent la grille et sont évacués par la sortie, sans encombrer la grille.

Selon l'invention, la grille 1 (figure 1A) est constituée par une surface de séparation en métal déployé, par exemple en acier inoxydable, ayant des ouvertures 10 de forme hexagonale, dont le grand axe GA est vertical, la surface de séparation est installée dans la cuve verticalement selon un tracé de préférence circulaire ou courbe, fermé sur lui-même ou constitué par un arc de cercle ou un arc de courbe telle qu'une spirale.

La veine d'effluents EF est dirigée le long de la surface de séparation pour induire un mouvement circulaire de la veine, au cours duquel et comme cela est connu, les déchets de grandes dimensions, les matières solides et lourdes sont entrainés et se mettent au centre de cet anneau liquide en mouvement circulaire pour descendre progressivement au fond du séparateur plus bas que la grille.

Dans le cas de la grille du séparateur selon l'invention, la veine d'effluents EF arrivant tangentiellement à la surface de la grille, est déviée par des surfaces de guidage placées devant chaque orifice de la grille créant ainsi des jets parallèles efficaces dégageant les ouvertures de la grille.

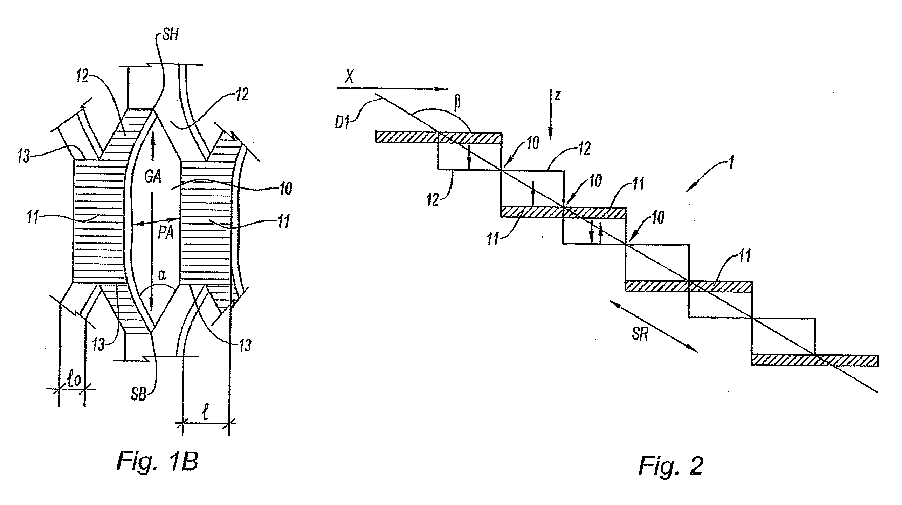

Selon la vue de détail agrandie de la figure 1B, une maille de la grille est une ouverture 10 de forme hexagonale, le grand axe GA dirigé verticalement lorsque la grille 1 est installée en position de fonctionnement. Le petit axe PA de l'ouverture 10 définit la dimension minimale des déchets pouvant traverser la grille car il correspond à la distance séparant deux côtés 11.

L'ouverture 10 est bordée par deux grands côtés droits 11 et deux groupes de branches inclinées 12 qui se rejoignent à chaque sommet haut et bas SH, SB de l'hexagone allongé de l'ouverture 10. Les branches 12 font entre elles chaque fois un angle α, relativement ouvert. La largeur (1) du côté 11 est double de la largeur (l₀) des branches 12. Grâce à la forme hexagonale des ouvertures 10, l'outillage utilisé pour découper et déployer la tôle permet d'obtenir des surfaces planes pour les côtés 11 et aussi pour les branches 12 rejoignant les côtés 11 par les plis droits 13. Les côtés 11 forment ainsi des surfaces de guidage planes assurant l'efficacité du fonctionnement du séparateur équipé d'une telle grille selon l'invention.

Selon une autre approche de la structure de la grille, on peut considérer que les mailles sont bordées par des lanières découpées dans la tôle et formant un profil en zigzag, composé de segments pratiquement plans. Ces lanières se rejoignent au niveau des noeuds constituant les surfaces de guidage 11 rectangulaires, planes.

Les lanières peuvent être considérées comme engendrées par des génératrices parallèles à une direction d'angle β par rapport à la direction générale de la tôle déployée. L'angle β est un angle obtus par rapport à la direction de passage des effluents sur la grille.

Cette forme particulière plane des surfaces de guidage 11 et aussi des parties des lanières 12 entre les surfaces de guidage est obtenue grâce à cette forme hexagonale des ouvertures 10 bordées par les deux côtés 11 longs et plans.

Ces surfaces correspondent aux surfaces d'action de l'outil réalisant la tôle déployée ; elles permettent également d'avoir des lanières réunissant deux noeuds et qui restent pratiquement des surfaces planes. Dans les limites de la déformabilité pour la tôle, cela permet aussi de raccourcir les lanières réunissant deux noeuds et d'augmenter ainsi l'angle d'ouverture α entre les deux lanières 12 définissant les deux sommets SH, SB de chaque ouverture 10 de forme hexagonale.

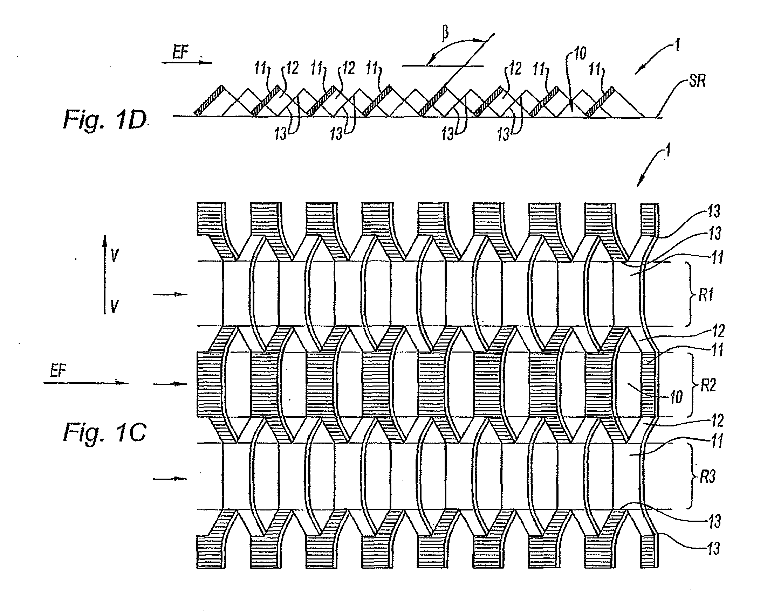

La figure 1C porte les indications utiles à la description du fonctionnement de la surface séparatrice 1 grâce à la forme des ouvertures hexagonales. Le sens de passage de la veine d'effluents sur la grille 1 est donné par la flèche EF dans le plan de la figure 1C et perpendiculaire à la direction verticale W d'installation de la grille et de la disposition du grand axe GA des ouvertures 10.

Les surfaces de guidage 11 constituent des rangées horizontales R1, R2, R3 sur lesquelles la veine d'effluents glisse pratiquement sans être perturbée, en décollant les déchets de grande dimension qui auraient pu s'y retenir provisoirement. L'intervalle I entre deux rangées R1, R2, ..., est très réduit ce qui réduit aussi le risque de perturbation de l'écoulement sur la grille et ne favorise pas l'accrochage des déchets au sommet des ouvertures 10 d'autant plus que les angles α sont très ouverts grâce à la forme hexagonale des ouvertures 10.

La figure 1D est une vue en coupe ou de bout de la figure 1A ou 1C et qui montre la disposition des surfaces de guidage 11 et les ouvertures 10 qui en résultent. Les surfaces de guidage 11 sont inclinées par rapport au plan de fabrication avant enroulement de la tôle déployée pour former la surface séparatrice placée dans le séparateur hydrodynamique. Cette vue laisse apparaître la déformation alternée des branches 12 issues d'un même noeud ou surface de guidage 11 représentées hachurées. Elle montre également les ouvertures 10 formées entre les lanières 12 et les lignes de pliage 13.

L'ensemble de la surface séparatrice constituée par la grille 1 en tôle déployée, se situe ainsi dans un plan avant sa mise en forme globalement cylindrique de section circulaire ou en spirale, correspondant à un tour entier ou à une fraction de tour dans le séparateur.

La figure 2 montre une étape de fabrication d'une grille 1 en tôle déployée, dans la position de fabrication ; le plan de la tôle avant sa découpe est le plan horizontal figuré par la flèche X. La direction d'attaque de l'outil est la direction verticale Z. La partie de l'outil qui déforme chaque noeud réalise la surface de guidage 11 d'une largeur (selon la direction X) égale au double de celle d'une lanière ou branche 12. Dans cette vue en coupe, analogue à celle de la figure 1D, les flèches indiquent la direction de déplacement des lanières 12 d'un même côté du noeud 11.

Du côté aval, les lanières 12 se déforment vers le bas et du côté amont, elles se déforment vers le haut selon la direction indiquée par les flèches.

L'angle β des noeuds par rapport à la diagonale D1 des noeuds telle que figurée, correspond à l'inclinaison des surfaces de guidage 11 par rapport à la surface de base ou surface de référence SR de la tôle déployée une fois façonnée et installée suivant une disposition cylindrique.

Un premier mode de réalisation de l'ensemble d'un séparateur hydrodynamique sera décrit ci-après à l'aide des figures 3A-3B-3C. Ce séparateur hydrodynamique est de type cyclone avec un trop-plein intégré.

Le séparateur hydrodynamique se compose d'une cuve 100 en béton, munie d'un couvercle 101 équipé d'un trou d'accès 102.

La veine d'effluents chargés (E1) arrive par un canal d'entrée 103 muni d'un organe de guidage 104 à l'intérieur de la cuve. La sortie des effluents nettoyés se fait par le canal 105 débouchant en partie haute de la cuve comme le canal d'alimentation 103.

La séparation des deux chambres 110, 120 est assurée par une cloison 130 de forme curviligne dont une partie de la hauteur est occupée par une grille 132 à ouvertures hexagonales comme celle décrite aux figures 1A-2.

La cloison pleine est lisse en dessous et au-dessus de la grille 132. La partie basse 131 de la cloison descend jusqu'au fond de la cuve 100 alors que la partie supérieure 133, au-dessus de la grille 132 n'arrive toutefois pas complètement sous le couvercle 101.

La partie supérieure 133 est découpée pour former une cloison de trop-plein 134 précédée par une cloison siphoïde 135, plongeant sous le niveau normal d'eau H1 dans la cuve 100, niveau défini par le niveau de la canalisation de sortie 105.

Cette cloison 130 sans sa grille 132 est, de préférence, constituée par une cloison de tôle pleine.

La cloison 130 rejoint tangentiellement la paroi intérieure de la cuve 100, et la cloison verticale munie en partie supérieure du trop-plein de sécurité 134, est précédée à cet endroit par la cloison siphoïde 135.

Le tracé de la cloison apparaît en plan sur la figure 3B et sa structure géométrique complexe apparaît plus simplement dans la vue de la figure 3A qui est une coupe selon des plans verticaux suivant le tracé III-III de la figure 3B et dans la figure 3C.

Selon la figure 3B, la cloison 130 séparant les deux chambres 110, 120 du séparateur est composée d'une première partie 130a en arc de cercle, cylindrique, s'appuyant tangentiellement contre la paroi de la cuve 100 et d'une seconde partie 130b sensiblement radiale avec la cloison siphoïde 135. La cloison 130 arrive à la hauteur Hm de la cuve juste sous le couvercle 101 en laissant un léger intervalle technique ; cette hauteur est nettement au-dessus du niveau H1 de sortie de la cuve.

La première partie 130a de la cloison est formée de la partie inférieure pleine 131, de la grille 132 occupant la partie médiane entre la hauteur H0 et le niveau de sortie H1, sur la plus grande partie de la surface courbe, pratiquement du côté de la cuve 100 jusqu'à la deuxième partie 130b de la cloison comme le montre la figure 3C.

Au-dessus de la grille 132, il y a la cloison supérieure 133, également pleine.

La deuxième partie 130b de la cloison est formée de la partie inférieure pleine, remontant jusqu'à la hauteur H2 du trop-plein 134 en formant une ouverture de débordement. Cette ouverture est protégée en amont par la cloison siphoïde 135 plongeant jusqu'à la hauteur P1 dans la cuve 100 sous le niveau H1 en formant en partie basse, une entrée de siphon. Lorsque la hauteur du niveau d'eau dans la première chambre 110 dépasse le niveau de trop-plein H2, les effluents passent par-dessus le déversoir du trop-plein 134 en empruntant le chemin dans le siphon selon la flèche curviligne F100 pour passer directement dans le canal de sortie 105.

Dans les conditions normales de fonctionnement, le déflecteur d'entrée 104 dirige la veine d'effluents selon les flèches (F101, F102) (figure 3B) le long de la paroi de la cuve. La veine de fluide est alors reprise par la cloison 130 en forme de cylindre circulaire. Le volume d'entrée 110 ainsi défini ne chevauche pratiquement pas l'orifice d'accès 102 et qui apparaît en pointillés dans la vue de la figure 3B. Cette représentation est faite pour montrer que la projection de l'orifice d'accès 102 du couvercle se situe bien dans le volume d'entrée du séparateur et permet d'accéder facilement à ce volume d'entrée. Cette disposition facilite la mise en place d'un tuyau de pompage au fond de la cuve pour la récupération des déchets déposés et aussi l'accès d'une personne. En effet, l'orifice d'accès 102 débouche dans ce volume suffisamment grand car délimité par la forme concave du déflecteur et permet d'avoir un volume d'accès suffisant pour les travaux d'entretien.

Les figures 4A et 4B montrent, en coupe verticale et en coupe horizontale, un autre mode de réalisation d'un séparateur hydrodynamique à trop-plein extérieur. Ce séparateur se compose d'une cuve de traitement 200, de forme cylindrique et de préférence de section circulaire, réalisée en béton comportant une cloison de séparation 230 avec une chambre d'entrée 210 recevant les effluents chargés et une chambre de sortie 120 recueillant les effluents nettoyés pour les évacuer.

L'entrée de la cuve se fait à partir d'un ouvrage de prise ou déversoir 240 relié à la canalisation d'effluents à traiter 241. Ce déversoir 240 est un ouvrage divisé en un volume d'entrée 242 et un volume de sortie 243 par une cloison 244 sur une partie de hauteur de l'ouvrage de façon à diriger normalement la veine d'effluents chargés dans la cuve de traitement 200 et permettre, en cas de débit trop abondant, à l'excédent de passer par-dessus la cloison 244 et aller directement à la sortie.

Le volume d'entrée 242 de ce déversoir 240 communique avec la cuve de traitement 200 par un passage 245 non radial mais tangentiel, dirigé le long de la cloison 230. Cette cloison 230 est constituée par une partie inférieure 231, une partie moyenne au niveau de laquelle il y a la grille de séparation 232 et, au-dessus de celle-ci, une partie supérieure 233. La partie 230 présente une forme cylindrique semi-circulaire avec continuité de la partie inférieure 231, de la grille 232 et de la partie supérieure 233 suivant le tracé courbe rejoignant pratiquement tangentiellement le canal formé par la cloison 244 du déversoir 240 qui dirige la veine de fluide tangentiellement sur la cloison 230. L'autre côté de la cloison 230 rejoint le côté intérieur de la cuve de traitement 200 par une cloison sensiblement radiale 206 qui représente un décrochement.

Ce décrochement peut recevoir une échelle fixée à demeure dans la cuve, à proximité de l'orifice d'accès 202. Comme la veine d'effluents chargés décrit une trajectoire circulaire, elle ne balaiera pas cette surface sensiblement radiale 206 et les déchets de grandes dimensions ne risqueront pas de s'accrocher aux échelons de l'échelle.

La veine d'effluents génère ainsi un mouvement de rotation le long de la partie pleine 233 de la cloison pour descendre au niveau de la grille 232 en léchant cette grille comme dans les autres modes de réalisation. Les déchets lourds ou encombrants sont détachés de la grille 232 et descendent progressivement au fond de la cuve 200, en dessous de la grille 232 dans ce qui constitue un volume de stockage de gros déchets.

L'effluent nettoyé peut traverser la grille de séparation 232 pour arriver dans la chambre de sortie 220 qui communique avec le regard de sortie 250 à laquelle est également raccordé le volume 243 du déversoir 240, en aval de son volume d'entrée 242.

Le mouvement de rotation de la veine d'effluents à l'intérieur de la première chambre du séparateur est schématisé par les flèches circulaires F201, F202.

La vue en plan de la figure 4B montre, en traits interrompus, la position possible des orifices d'accès 202 du couvercle. Ces orifices d'accès permettent d'accéder facilement à la chambre d'entrée 210 ou à la chambre de sortie 220 dans la cuve 200 du séparateur.

Ce séparateur hydrodynamique de grandes dimensions relie la sortie 205 de la cuve de traitement à l'ouvrage d'évacuation d'eaux traitées 250 par l'intermédiaire d'un regard de jonction 260. La liaison pourrait également être faite directement.

Les figures 5A, 5B montrent un autre mode de réalisation d'un séparateur hydrodynamique avec un trop-plein extérieur.

Ce séparateur se compose d'une cuve de traitement 300 cylindrique de section circulaire munie d'une cloison de séparation 330 de forme cylindrique circulaire recevant sur une partie inférieure 331 pleine, la grille de séparation 332 de forme cylindrique circulaire elle-même surmontée d'une partie de cloison pleine 333, cylindrique circulaire.

Cet ensemble constitué par la partie inférieure 331, la grille 332 et la partie supérieure 333 divise la cuve de traitement 300 en une chambre d'entrée 310 extérieure recevant les effluents chargés et une chambre de sortie 320 intérieure dans laquelle arrivent les effluents nettoyés. La chambre intérieure 320 est reliée à la sortie par une conduite 321 partant en position basse de la chambre recevant l'eau traitée ayant traversé la grille 332, cette conduite 321 forme un siphon de sortie évitant que les liquides légers ayant traversés la grille ne puissent passer dans la sortie.

Cette conduite 321 débouche, en partie basse, dans la chambre 349 qui remonte vers la sortie 350. La veine d'effluents chargés arrive par la canalisation d'entrée 341 dans un déversoir d'entrée 340, pour arriver tangentiellement comme le montre la figure 5B dans la cuve 300 et y circuler suivant la direction des deux flèches F301, F302 dans la chambre extérieure 310. Grâce à cette rotation, la veine d'effluents détache les éventuels déchets accrochés à la surface extérieure de la grille 332 pour permettre aux effluents nettoyés des macro déchets, de traverser la grille et de passer dans le volume intérieur 320 pour ensuite être extrait par la conduite de sortie.

Le déversoir d'entrée comporte également un trop-plein 344 qui, dans les conditions normales de débit, alimente la cuve 300 mais qui, en cas de fort débit d'entrée, laisse passer une partie de ce débit par-dessus la cloison de trop-plein 344 pour arriver directement à la sortie.

Ce séparateur hydrodynamique est un séparateur de grandes dimensions, par exemple une cuve de quelques mètres de diamètre et une hauteur également de quelques mètres. L'orifice d'accès 302 prévu dans le couvercle 301 de la cuve 300 permet d'accéder facilement dans le volume extérieur 310 et aussi au niveau de la grille 332 en tournant autour de la grille 332 dans le volume extérieur.

Alors que dans les modes de réalisation précédents, la veine d'effluents chargés circule à l'intérieur de la grille, dans ce mode de réalisation, la circulation se fait à l'extérieur.

## Revendications

1. Séparateur hydrodynamique pour séparer des matières solides d'une veine d'effluents chargés traversant l'appareil comprenant une cuve ayant une chambre d'entrée et une chambre de sortie séparées par une cloison constituée par une grille, destinée à être traversée par les effluents et sur laquelle la veine d'effluents arrive tangentiellement,
la chambre d'entrée recueillant les déchets solides de dimensions déterminées et la chambre de sortie, située en aval de la cloison de séparation, recevant les effluents nettoyés de leurs déchets solides, séparateur **caractérisé en ce que**
- la grille (1) de la cloison de séparation (130) entre la chambre d'entrée (110) et la chambre de sortie (120) de la cuve est constituée par une tôle en métal déployé dont les ouvertures (10) ont une forme hexagonale allongée délimitée par des lanières de métal déployé, ces lanières étant formées de surfaces planes engendrées par des génératrices parallèles, faisant un angle obtus β par rapport à la surface globale de grille (1),
- les ouvertures hexagonales (10), allongées, étant bordées par des lanières de métal formant les côtés (11) dans le sens de la longueur des ouvertures et par des lanières de métal formant les branches (12) rejoignant les deux sommets (SH, SB) des ouvertures hexagonales et rejoignant celles-ci par des lignes de pliage (13),
- les côtés plans (11) ayant une largeur égale au double de celle des branches (11),
- les ouvertures (10) ayant un grand axe (GA) perpendiculaire à la direction du petit axe (PA) correspondant à la direction (EF) de la veine d'effluents chargés passant le long de la grille (1) lorsque celle-ci est installée dans le séparateur hydrodynamique.

2. Séparateur hydrodynamique selon la revendication 1,
**caractérisée en ce que**
la cuve (100) de forme cylindrique de section circulaire contenant la chambre d'entrée (110) et la chambre de sortie (120), a un volume intérieur subdivisé par la cloison séparatrice (130) en la chambre d'entrée (110) et la chambre de sortie (120), la canalisation d'entrée (103) débouchant dans la chambre d'entrée et la canalisation de sortie (105) des effluents nettoyés partant de la chambre de sortie (120),
la cloison (130) étant composée d'une partie inférieure pleine (131), d'une partie médiane (132) formée par une grille en métal déployé à ouvertures hexagonales de grand axe (GA) dirigé dans la direction verticale, et d'une partie de cloison supérieure (133), fermant pratiquement toute la hauteur de l'intérieur de la cuve,
cette cloison (130) rejoignant la paroi de la cuve par un contact tangentiel, en étant disposée selon un tracé courbe, notamment en arc de cercle, pour rejoindre à l'autre extrémité une partie de cloison radiale formant un trop-plein (134) protégé par une paroi siphoïde (135) permettant l'évacuation directe d'un trop-plein résultant d'un débit excessif d'effluents à l'entrée,
la cloison ayant son tracé convexe de façon à laisser dégagée pratiquement la partie centrale de la cuve surmontée d'un orifice d'accès (102) afin de permettre exploitation et maintenance.

3. Séparateur hydrodynamique selon la revendication 2,
**caractérisé en ce que**
les parties inférieures (131) et supérieure (133) de la cloison ainsi que le trop-plein (134) et la cloison siphoïde (135) sont constituées par des éléments en tôle pleine.

4. Séparateur hydrodynamique selon la revendication 1,
**caractérisé en ce que**
- la cuve (200) cylindrique de section circulaire, munie d'un ouvrage extérieur (240) formant déversoir, installé à l'entrée (245) de la cuve et relié à la canalisation d'arrivée (241) des effluents chargés, la cuve (200) étant subdivisée en la chambre d'entrée d'effluents chargés (210) et la chambre de sortie d'effluents nettoyés (220) par la cloison (230) de forme cylindrique et de section sensiblement en demi-cercle, comprenant une partie inférieure (231) pleine, surmontée d'une grille (233) en tôle déployée à ouvertures de forme hexagonale dont le grand axe est vertical et une partie supérieure (233) pleine,
* la cloison (230) rejoignant le côté intérieur de la cuve (200) est une cloison radiale (206),
* le boîtier d'entrée (240) ayant une cloison de trop-plein (244) dirigeant le flux d'entrée vers l'orifice d'entrée (245) de la cuve (200) pour diriger la veine d'effluents tangentiellement sur la cloison supérieure (233) pour être mise en rotation et descendre en tournant sur la face intérieure de la grille (232),
* cette cloison de trop-plein (244) laissant passer un débit excessif de la canalisation d'entrée (241) vers le regard de sortie (250), directement sans passer par la cuve (200) du séparateur hydrodynamique,
* la sortie (205) de la chambre (220) d'effluents nettoyés étant également reliée au regard de sortie (250).

5. Séparateur hydrodynamique selon la revendication 1,
**caractérisé en ce qu'**
il se compose d'une cuve de traitement (300) de forme cylindrique circulaire, logeant en son centre une partie cylindrique formant une cloison de séparation composée d'une partie inférieure (331) pleine, surmontée d'une grille de forme cylindrique (332) réalisée en tôle déployée avec des ouvertures hexagonales dont le grand axe est vertical, la grille (332) étant elle-même surmontée d'une partie supérieure (333) pleine cylindrique, et
un ouvrage d'entrée (340) reliée à la conduite d'effluents chargés (341), cet ouvrage d'entrée étant munie d'une cloison de trop-plein (344) divisant l'ouvrage (340) en un volume d'entrée dirigeant les effluents chargés tangentiellement dans la chambre extérieure (310) de la cuve (300) et un volume de sortie au-delà de la cloison de trop-plein (344) et dans lequel passent directement les effluents chargés,
la veine d'effluents chargés étant dirigée suivant un mouvement de rotation (F300) dans la chambre d'entrée recevant les effluents chargés (310) entourant la chambre cylindrique de sortie recevant les effluents nettoyés (320) ayant traversé la grille (332),
le dessus (301) de la cuve (300) ayant un orifice d'accès (302) permettant d'accéder dans la chambre extérieure (310) entourant la cloison (330).

6. Séparateur hydrodynamique selon la revendication 5,
**caractérisé en ce que**
la chambre cylindrique de sortie (320) est reliée à la sortie (350) du séparateur par une conduite (321) formant siphon

## Patentansprüche

1. Hydrodynamischer Separator zum Abscheiden von Feststoffen aus einem belasteten Abwasserstrom, der durch die Vorrichtung strömt, enthaltend einen Behälter mit einer Einlasskammer und einer Auslasskammer, die durch eine Zwischenwand getrennt sind, die aus einem Gitter besteht, das dazu bestimmt ist, von dem Abwasser durchströmt zu werden und auf das der Abwasserstrom tangential auftrifft,
wobei die Einlasskammer die festen Abfallstoffe mit bestimmten Abmessungen abfängt und die stromabwärts der Trennzwischenwand gelegene Auslasskammer das von seinen festen Abfallstoffen gereinigte Abwasser aufnimmt,
welcher Separator **dadurch gekennzeichnet, dass**
- das Gitter (1) der Trennzwischenwand (130) zwischen der Einlasskammer (110) und der Auslasskammer (120) des Behälters aus einem Blech aus Streckmetall besteht, dessen Öffnungen (10) eine längliche Sechseckform haben, die von Bändern aus Streckmetall begrenzt wird, wobei diese Bänder aus ebenen Flächen bestehen, die von parallel verlaufenden Mantellinien gebildet werden, die einen stumpfen Winkel bezüglich der Gesamtfläche des Gitters (1) einschließen,
- wobei die sechseckförmigen länglichen Öffnungen (10) von Metallbändern umrandet sind, die in Richtung der Länge der Öffnungen die Seiten (11) bilden, sowie von Metallbändern, welche die Schenkel (12) bilden, die auf die beiden Scheitelpunkte (SH, SB) der sechseckförmigen Öffnungen treffen und über Biegelinien (13) auf diese treffen,
- wobei die ebenen Seiten (11) eine Breite haben, die gleich der zweifachen Breite der Schenkel (11) ist,
- wobei die Öffnungen (10) eine Hauptachse (GA) haben, die senkrecht zur Richtung der Nebenachse (PA) verläuft, welche der Richtung (EF) des belasteten Abwasserstroms entspricht, der entlang des Gitters (1) strömt, wenn dieses im hydrodynamischen Separator verbaut ist.

2. Hydrodynamischer Separator nach Anspruch 1,
**dadurch gekennzeichnet, dass**
der im Querschnitt kreisförmige, zylindrische Behälter (100), der die Einlasskammer (110) und die Auslasskammer (120) enthält, ein Innenvolumen aufweist, das von der Trennzwischenwand (130) in Einlasskammer (110) und Auslasskammer (120) unterteilt wird, wobei die in die Einlasskammer mündende Einlassleitung (103) und die Auslassleitung (105) für das gereinigte Abwasser von der Auslasskammer (120) ausgehen,
wobei die Zwischenwand (130) aus einem massiv ausgeführten unteren Teil (131), einem Mittelteil (132), das aus einem Gitter aus Streckmetall mit sechseckförmigen Öffnungen mit in senkrechter Richtung gerichteter Hauptachse (GA) besteht, und aus einem oberen Wandteil (133) gebildet ist und praktisch die gesamte Höhe des Innenraums des Behälters verschließt,
wobei diese Zwischenwand (130) mit tangential verlaufendem Kontakt auf die Behälterwand trifft und dabei mit einem kurvenförmigen, insbesondere kreisbogenförmigen Verlauf angeordnet ist, um am anderen Ende auf einen radial verlaufenden Zwischenwandabschnitt zu treffen, der einen Überlauf (134) bildet, der von einer siphonförmigen Wand (135) abgeschirmt wird, welche das direkte Abführen von einem Überlauf aufgrund einer übermäßigen Durchflussmenge von Abwasser am Einlass gestattet,
wobei die Zwischenwand einen konvexen Verlauf hat, so dass praktisch der Mittelbereich des Behälters freigelassen wird, der von einer Zugangsöffnung (102) überhöht wird, um Betrieb und Wartung zu gestatten.

3. Hydrodynamischer Separator nach Anspruch 2,
**dadurch gekennzeichnet, dass**
der untere (131) und der obere Teil (133) der Zwischenwand sowie der Überlauf (134) und die siphonförmige Zwischenwand (135) aus Elementen aus massivem Blech bestehen.

4. Hydrodynamischer Separator nach Anspruch 1,
**dadurch gekennzeichnet, dass**
- der im Querschnitt kreisförmige, zylindrische Behälter (200) mit einem äußeren Anbauteil (240) versehen ist, welches einen Ablauf bildet, am Einlass (245) des Behälters montiert und mit der Zulaufleitung (241) für belastetes Abwasser verbunden ist, wobei der Behälter (200) in Einlasskammer (210) für belastetes Abwasser und in Auslasskammer (220) für gereinigtes Abwasser durch die Zwischenwand (230) aufgeteilt ist, welche zylinderförmig ist und einen im wesentlichen halbkreisförmigen Querschnitt hat und einen massiv ausgeführten unteren Abschnitt (231), der von einem Gitter (233) aus Streckmetall mit sechseckförmigen Öffnungen mit vertikal verlaufender Hauptachse überhöht wird, und einen massiv ausgeführten oberen Abschnitt (233) enthält,
- wobei die Zwischenwand (230), die auf die Innenseite des Behälters (200) trifft, eine radial verlaufende Zwischenwand (206) ist,
- wobei das Einlassgehäuse (240) eine Überlaufzwischenwand (244) aufweist, über welche der Einlassstrom zur Einlassöffnung (245) des Behälters (200) geleitet wird, um den Abwasserstrom tangential auf die obere Zwischenwand (233) zu leiten, damit dieser in Drehung versetzt wird und drehend auf der Innenseite des Gitters (232) abfließt,
- wobei diese Überlaufzwischenwand (244) eine übermäßige Durchflussmenge der Einlassleitung (241) zum Auslassschacht (250) hin unmittelbar durchlaufen lässt, ohne durch den Behälter (200) des hydrodynamischen Separators zu treten,
- wobei der Auslass (205) der Kammer (220) für gereinigtes Abwasser auch mit dem Auslassschaft (250) verbunden ist.

5. Hydrodynamischer Separator nach Anspruch 1,
**dadurch gekennzeichnet, dass**
er aus einem Behandlungsbehälter (300) mit kreiszylindrischer Form besteht, der in seinem Zentrum einen Zylinderabschnitt aufnimmt, welcher eine Trennzwischenwand bildet, die aus einem massiv ausgeführten unteren Teil (331) besteht, der von einem zylinderförmigen Gitter (332) aus Streckmetall mit sechseckförmigen Öffnungen mit vertikal verlaufender Hauptachse überhöht wird, wobei das Gitter (332) seinerseits von einem massiv ausgeführten, zylindrischen oberen Teil (333) überhöht wird, und sowie aus
- einem Einlassanbauteil (340), das mit der Leitung für belastetes Abwasser (341) verbunden ist, wobei dieses Einlassanbauteil mit einer Überlaufzwischenwand (344) versehen ist, welche das Anbauteil (340) in einen Einlassraum, welcher das belastete Abwasser tangential in die äußere Kammer (310) des Behälters (300) leitet, und in einen Auslassraum jenseits der Überlaufzwischenwand (344) unterteilt, in welchen das belastete Abwasser unmittelbar strömt,
wobei der belastete Abwasserstrom mit einer Drehbewegung (F300) in die Einlasskammer geleitet wird, welche das belastete Abwasser (310) aufnimmt, das die zylindrische Auslasskammer umgibt, welche das gereinigte Abwasser (320) aufnimmt, welches das Gitter (332) durchströmt hat,
wobei die Oberseite (301) des Behälters (300) eine Zugangsöffnung (302) aufweist, die den Zugang in die äußere Kammer (310) gestattet, welche die Zwischenwand (330) umgibt.

6. Hydrodynamischer Separator nach Anspruch 5,
**dadurch gekennzeichnet, dass**
die zylindrische Auslasskammer (320) über eine siphonartige Leitung (321) mit dem Auslass (350) des Separators verbunden ist.

## Claims

1. A hydrodynamic separator for separating solid matter from a charged effluent stream passing through the apparatus comprising a vessel having an inlet chamber and an outlet chamber separated by a partition formed by a grid through which the effluent is designed to pass and with respect to which the effluent stream arrives tangentially, the inlet chamber collecting solid waste of predetermined dimensions and the outlet chamber, disposed downstream of the separation partition, receiving the effluent from which the solid matter has been cleaned, **characterized in that**:
- the grid (1) of the separation partition (130) between the inlet chamber (110) and the outlet chamber (120) of the vessel is formed by an expanded metal sheet whose openings (10) have an elongate hexagonal shape bounded by expanded metal strips, said strips being formed by planar surfaces generated by parallel generatrices, forming an obtuse angle β with respect to the overall surface of the grid (1),
- the elongate hexagonal openings (10) are bordered by metal strips forming the sides (11), in the longitudinal direction, of the openings and by metal strips forming branches (12) connecting the two vertices (SH, SB) of the hexagonal openings and connecting the latter by fold lines (13),
- the planar sides (11) have a width equal to double that of the branches (12),
- the openings (10) have a major axis (GA) perpendicular to the direction of the minor axis (PA) corresponding to the direction (EF) of the charged effluent stream passing along the grid (1) when it is installed in the hydrodynamic separator.

2. A hydrodynamic separator according to claim 1, **characterized in that** the vessel (100) of cylindrical shape and circular cross-section containing the inlet chamber (110) and the outlet chamber (120) has an inner volume subdivided by the separation partition (130) into the inlet chamber (110) and the outlet chamber (120), the inlet duct (103) communicating with the inlet chamber and the outlet duct (105) for the cleaned effluent starting from the outlet chamber (120), the partition (130) comprising a solid lower portion (131), a median portion (132) formed by an expanded metal grid with hexagonal openings whose main axis (GA) extends in the vertical direction, and an upper partition portion (133) in practice closing the entire top of the vessel interior, said partition meeting the vessel wall by tangential contact, and being disposed with a curved course, in particular a circular arc, in order at the other end to meet a radial partition portion forming an overflow (134) protected by a siphon wall (135) enabling the direct evacuation of an overflow caused by an excessive inlet effluent stream, the partition having its convex course so as in practice to leave clear the central portion of the vessel surmounted by an access opening (102) enabling management and maintenance.

3. A hydrodynamic separator according to claim 2, **characterized in that** the upper and lower portions (131, 133) of the partition as well as the overflow (134) and the siphon wall (135) are formed by solid sheet members.

4. A hydrodynamic separator according to claim 1, **characterized in that**:
- the cylindrical vessel (200) of circular cross-section, provided with an outer structure (240) forming a spillway installed at the inlet (245) of the vessel and connected to the charged effluent inlet duct (241), being subdivided into the charged effluent inlet chamber (210) and the cleaned effluent outlet chamber (220) by the partition (230) of cylindrical shape and substantially semi-circular cross-section, comprising a solid lower portion (231), surmounted by a grid (223) of expanded metal sheet with openings of hexagonal shape whose major axis is vertical, and a solid upper portion (223),
- the partition (230) meeting the inner side of the vessel (200) is a radial partition (206),
- the inlet housing (240) having an overflow partition (244) directing the inlet stream towards the inlet opening (245) of the vessel (200) so that the effluent stream is directed tangentially with respect to the upper partition (233) and so that it is caused to rotate and fall while rotating on the inner surface of the grid (232),
- said overflow partition (244) allowing an excessive flow to pass directly from the inlet duct (241) to the outlet opening (250), without passing via the vessel (200) of the hydrodynamic separator,
- the outlet (205) of the cleaned effluent chamber (220) also being connected to the outlet opening (250).

5. A hydrodynamic separator according to claim 1, **characterized in that** it comprises a treatment vessel (300) of cylindrical circular shape housing at its centre a cylindrical portion forming a separation partition composed of a solid lower portion (331) surmounted by a grid (332) of cylindrical shape made from expanded sheet metal with hexagonal openings whose major axis is vertical, the grid (332) itself being surmounted by a solid cylindrical upper portion (333), and an inlet structure (340) connected to the charged effluent duct (341), said inlet structure being provided with an overflow partition (344) dividing the structure (340) into an inlet volume directing the charged effluent tangentially into the outer chamber (310) of the vessel (300) and an outlet volume above the overflow partition (344) into which the charged effluent passes directly, the charged effluent stream being directed with a rotary movement (F300) into the inlet chamber receiving the charged effluent (310) surrounding the cylindrical outlet chamber receiving the cleaned effluent (320) passing through the grid (332), the top (301) of the vessel (300) having an access opening (302) enabling access to the outer chamber (310) surrounding the partition (330).

6. A hydrodynamic separator according to claim 5, **characterized in that** the cylindrical outlet chamber (320) is connected to the outlet (350) of the separator by a duct (321) forming a siphon.
